# EUROPEAN PATENT APPLICATION

(11) **EP 4 717 440 A2**
(43) Date of publication of application: **01.04.2026**
(21) Application number: 25203473.1
(22) Date of filing: 19.09.2025
(51) Int. Cl.: B29C 51/16, B29C 51/32, B29D 99/00, B29C 51/10, B29C 51/30, B29C 51/42, B29C 51/44, B29C 57/00, B29C 63/30, B29C 63/34, B29L 1/00, B29L 31/56

(54) **THERMOFORMING APPARATUS FOR APPLYING A COATING FILM TO A SUPPORT AND METHOD FOR MAKING A CAP THAT CAN BE IMPLEMENTED USING THE APPARATUS**

(30) Priority: 26.09.2024 IT 202400021430
(71) Applicant: G. Mondini SpA, 25033 Cologne (BS) (IT)
(72) Inventor: MONDINI, Paolo Carlo, 25033 Cologne (BS) (IT); PADERNI, Daniel, 25045 CASTEGNATO BS (IT)
(74) Representative: Ponchiroli, Simone

(57) **Abstract**

A thermoforming apparatus (1) for applying a coating film (2) to a support (3) comprising a bottom wall (4) and a lateral wall (5) which define an inner surface (6) and an outer surface (8). The thermoforming apparatus (1) comprises a supporting element (14), defining a housing space (15) for the support (3), and a closing element (16), which are movable between a home position, in which they are spaced apart, and a working position, in which they are coupled. The thermoforming apparatus (1) comprises means for creating a vacuum (19) for causing the coating film (2) to adhere to the inner surface (6), and a movable application element (23) for applying a portion (34) of the coating film (2) to the outer surface (8) at the lateral wall (5).

## Description

This invention relates to a thermoforming apparatus for applying a coating film to a support and a method for making a cap implementable with the thermoforming apparatus.

This invention, although initially defined for making caps for containers (for example for bottles), may advantageously be applied for making any object which comprises a concave support and a coating film applied to the support without interruption both internally, and, partly, externally. In more detail, the support comprises a bottom wall and a lateral wall which extends starting from a perimetric edge of the bottom wall. The bottom wall and the lateral wall define on one side an inner surface of the support, which delimits an inner cavity, and on the other side an outer surface of the support. In particular, the lateral wall extends between a lower edge, which is connected to the perimetric edge, and an upper edge. It should be emphasised that the invention was developed with reference to coating of a support without a flange, where the term "flange" refers to any portion of the support which extends outwards from the support, starting from the upper edge of the lateral wall. Therefore, in this case, the upper edge is substantially a free upper edge.

As is known, objects which have a concave shape of this type (that is to say, without a flange) are very widespread on the market. In particular, this is the shape not just of many caps for containers, such as common screw caps, but also of many types of containers (tubs/trays).

At present there are many prior art thermoforming apparatuses for applying a coating film to the inner surface of a concave support, generally for the purpose of making a container which has a thin polymeric layer on the face intended to make contact with the product and a cellulose-based material for the rest.

Generally, such apparatuses comprise a supporting element, which defines a housing for the support, and a closing element, which are operatively associable in such a way as to close the housing in a gas-tight way, and to retain the coating film above the support. Furthermore, the prior art thermoforming apparatuses comprise coating film heating means and vacuum creating means, for thermoforming the coating film and making it adhere on the inner surface of the support.

In some applications the thermoforming apparatuses also comprise cutting means which are configured to cut the excess coating film (which is not applied and made to adhere on the inner surface of the support).

However, the prior art thermoforming apparatuses for applying the coating film to the inner surface of a support have important disadvantages.

First of all, it must be considered that, in this type of apparatuses, once coating film application is complete, the support has, at the upper edge of the lateral wall, a free upper surface (which corresponds to the thickness of the lateral wall) which is not coated by the coating film.

That may be a problem where the aim is to make an object which must maintain its shape unchanged as far as possible during use (for example, a cap), using a support mainly constituted of cellulose material or of a different material which might easily absorb water: in fact, a material of this type, if it absorbs water may change its structural characteristics and, therefore, deform.

Generally, to reduce the risk that a support might absorb water, its inner and outer surfaces are made in such a way as to reduce the ability to absorb liquids (such as water) for example by means of suitable surface finishes or pressing. In spite of that, such a result is difficult to achieve at least for cellulose material-based supports, at the free upper surface of the upper edge, where the cellulose fibres extend transversally to the surface (unlike what happens at the inner surface and the outer surface at which the fibres are parallel to the surface). That trend of the cellulose fibres makes the free upper surface extremely capable of absorbing many liquids, in particular water.

It is easy to understand how the thermoforming apparatuses of the type described up to now are not suitable for making caps by coating cellulose material-based supports, given that the risk that a cap will make contact with liquids is very high, just as there is a very high risk that upon making contact with liquids, at the free upper surface of the lateral wall, the cap will deform and no longer be able to be used correctly.

In an attempt to overcome that disadvantage, a second type of prior art apparatuses is in contrast configured in such a way as to entirely coat the support with the coating film, in such a way as to enclose the support in an impermeable cover.

Although solving the above-mentioned problem, even this second type of apparatuses is not without disadvantages. In particular, they are apparatuses with complex construction and limited productivity.

In this context the technical purpose which forms the basis of this invention is to make a thermoforming apparatus for applying a coating film to a support and to define a method for making a cap, which at least partly solve the above-mentioned disadvantages.

In particular, the technical purpose of this invention is to make a thermoforming apparatus for applying a coating film to a support and to define a method for making a cap which allow objects (and in particular caps) to be made which are structurally stable even using supports constituted of cellulose-based materials or those with similar capacity for absorbing liquids, in a way that is simpler than in the prior art.

The technical purpose and the aims indicated are substantially achieved by a thermoforming apparatus for applying a coating film to a support and by a method for making a cap, as defined in the independent claims. Particular embodiments of this invention are defined in the corresponding dependent claims.

Further features and the advantages of this invention will be more apparent from the detailed description of several preferred, non-limiting embodiments, of a thermoforming apparatus for applying a coating film to a support and of a method for making a cap which are illustrated in the accompanying drawings, in which:
- Figure 1 shows, in a side view in vertical cross-section, a thermoforming apparatus for applying a coating film to a support in accordance with this invention, with a supporting element and a closing element in a home position;
- Figure 2 shows the thermoforming apparatus of Figure 1, with the supporting element and the closing element in a working position, with an application element in a non-operating position and with cutting means in a retracted position;
- Figure 3 shows the thermoforming apparatus of Figure 2, in a subsequent working step;
- Figure 4 shows the thermoforming apparatus of Figure 3, with the cutting means in an extracted position;
- Figure 5 shows the thermoforming apparatus of Figure 4, with the application element in an operating position;
- Figure 6 shows the thermoforming apparatus of Figure 5, with the application element in the non-operating position and with the cutting means in the extracted position;
- Figure 7 shows the thermoforming apparatus of Figure 6, with the supporting element and the closing element in the working position and with the support in a housing space of the supporting element;
- Figures 8 and 9 show the thermoforming apparatus of Figure 7, with the support outside the housing space in two successive working steps;
- Figure 10 is an enlarged view of the detail X of Figure 2;
- Figure 11 is an enlarged view of the detail XI of Figure 3;
- Figure 12 is an enlarged view of the detail XII of Figure 4;
- Figure 13 is an enlarged view of the detail XIII of Figure 5;
- Figure 14 is an enlarged view of the detail XIV of Figure 6;

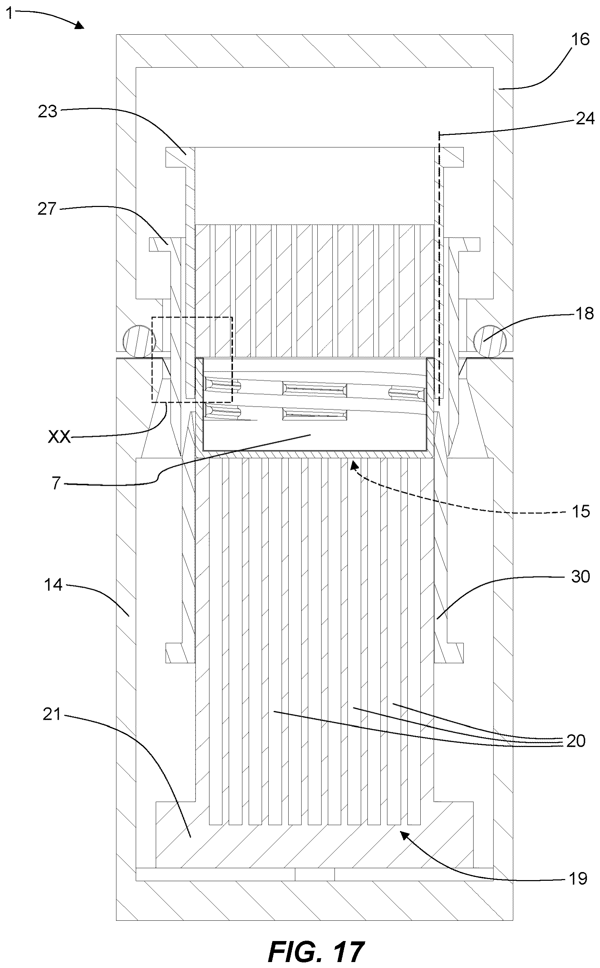

- Figures 15, 16 and 17 show, respectively, the thermoforming apparatus of Figure 3, 4 and 5 in accordance with a different operation;
- Figure 18 is an enlarged view of the detail XVIII of Figure 15;
- Figure 19 is an enlarged view of the detail XIX of Figure 16; and

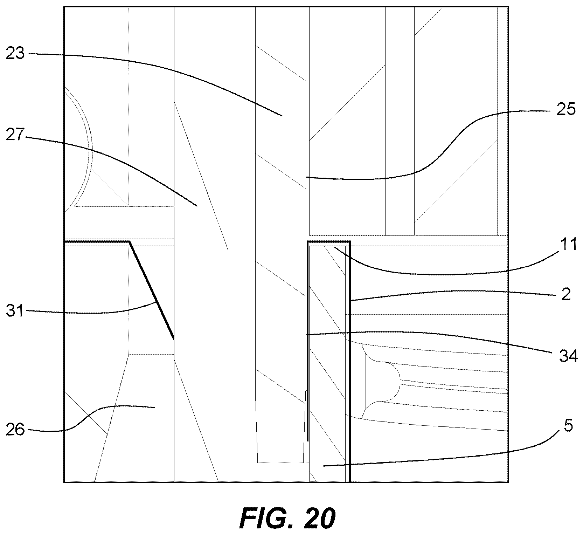

- Figure 20 is an enlarged view of the detail XX of Figure 17.

In the detailed description which follows, first of all a thermoforming apparatus for applying a coating film to a support will be described, which constitutes a first aspect of this invention, then a method for making a cap will be described, which constitutes a second aspect of this invention and which may be implemented with the thermoforming apparatus.

With reference to the figures the reference number 1 denotes in its entirety the thermoforming apparatus in accordance with this invention, whilst the reference number 2 denotes the coating film and the reference number 3 denotes the support.

The thermoforming apparatus 1 according to this invention is, in particular, configured to apply the coating film 2 to a support 3 which comprises a bottom wall 4 and a lateral wall 5. The bottom wall 4 and the lateral wall 5 define both an inner surface 6 of the support 3, which delimits an inner cavity 7, and, on the opposite side, an outer surface 8 of the support 3. The lateral wall 5 extends starting from a perimetric edge 9 of the bottom wall 4 and extends, advantageously, between a lower edge 10, which is connected to the bottom wall 4 at the perimetric edge 9, and an upper edge 11, which is a free upper edge 11 and which defines an upper opening 12 of the support 3 to allow access to the inner cavity 7.

In the figures, the bottom wall 4 is circular and the lateral wall 5 extends in an annular way around the inner cavity 7 and extends perpendicularly to the bottom wall 4. In more detail, the accompanying figures show the making of a cap 33 by application of the coating film 2 to a support 3 which has a shape that, without the thickness of the coating film 2 which must be applied, corresponds to that of the cap 33 to be obtained; in particular the cap 33 has an inner thread structure 13 which is interrupted (schematically illustrated in the figures). However, despite what is shown in the figures, this invention shall not be understood as being limited to that type of support 3, since it is possible to apply it even if the support is different from what is shown in the figures (such as, for example, in the case in which the support is an outer skeleton without a flange of a container intended to receive a product to be packaged).

It should be emphasised that this invention is not limited either by the shape, or by the type of the support, which for example may be coloured, transparent, with text, etc. Moreover, this invention is not limited by the material of which the support is constituted. With regard to that, although the invention has been mainly developed with reference to a support which is advantageously constituted of a cellulose material-based article (for example made of cellulose pulp, cardboard, paperboard, etc.), it may also be applied in the case in which the support is constituted of different materials, for example a plastic material-based article or a metal material-based article (such as aluminium). It is also possible to have supports constituted of different materials (for example, of cellulose material coupled to plastic material). Moreover the support may be constituted of multiple bodies/layers coupled to each other or of a single body/layer.

This invention is also not limited by the type of coating film since it may be coloured, transparent, etc. Moreover, the coating film may be constituted of fossil-based plastics, bio-based plastics, natural plastics, biodegradable or compostable plastics, or mixtures thereof, or of a multi-layer material based on one or more of them.

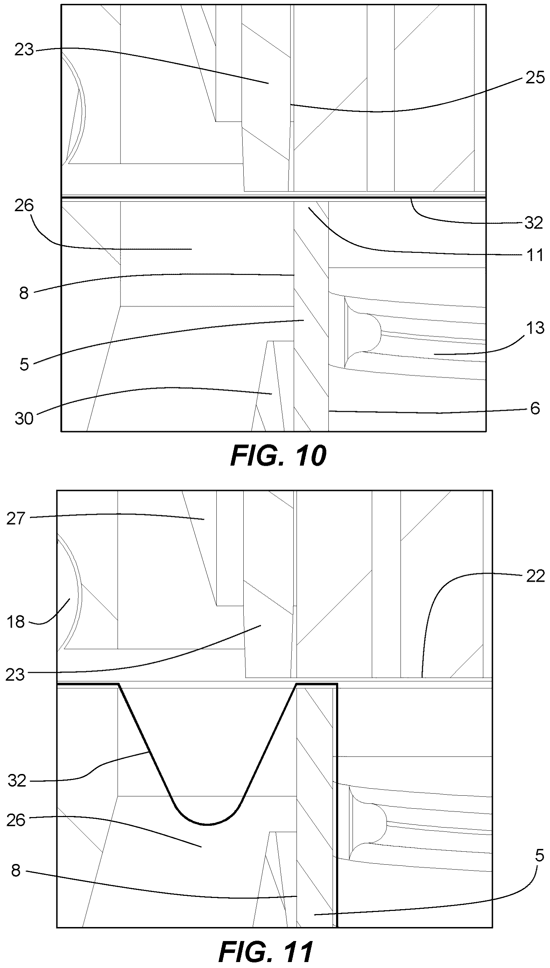

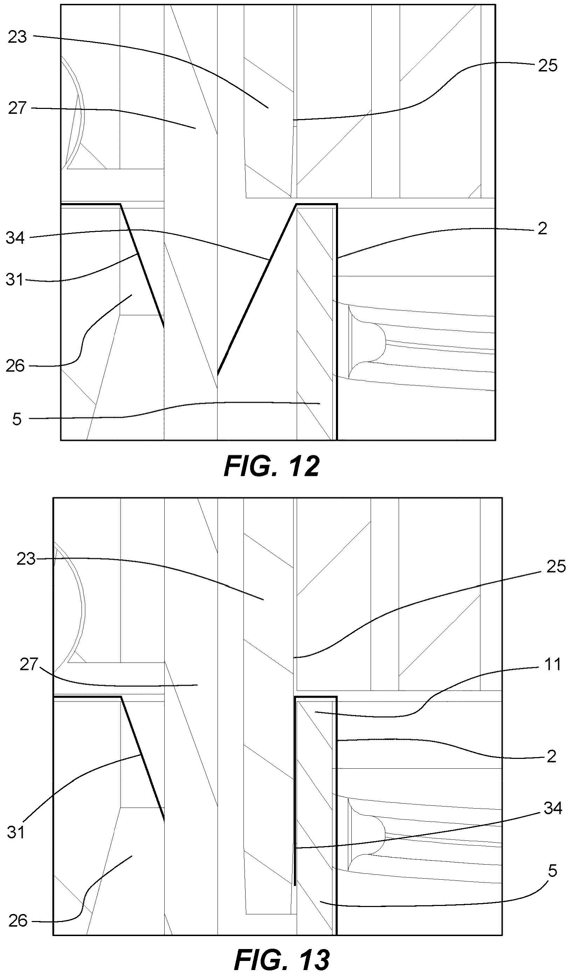

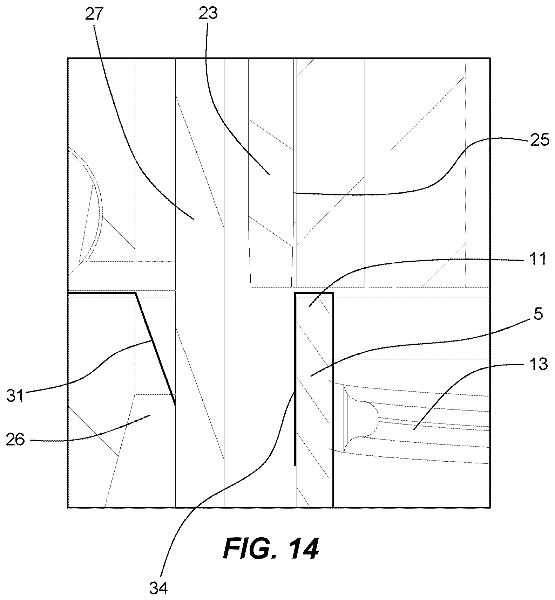

As regards the thermoforming apparatus 1, it must be emphasised that in the accompanying figures, as can be clearly seen in particular in Figures 10 to 14, the elements and the components shown are illustrated slightly spaced apart from each other even where in reality they are not, so as to give a clearer view of the elements, or the components (for example the coating film 2) and the ways in which they interact with each other. That is clear, for example, by observing that the coating film 2 thermoformed on the inner surface 6 of the support 3 is shown slightly detached from that inner surface 6 (Figure 12).

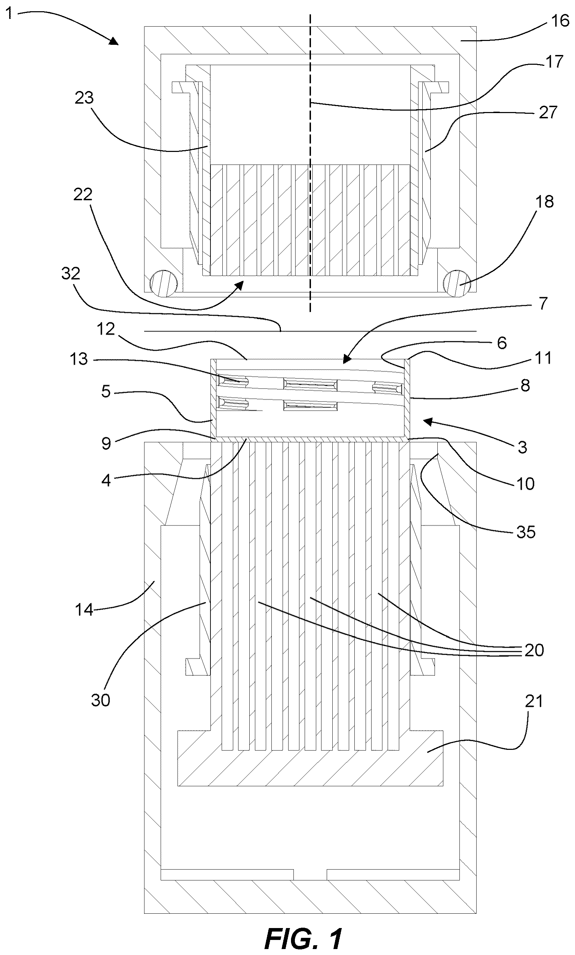

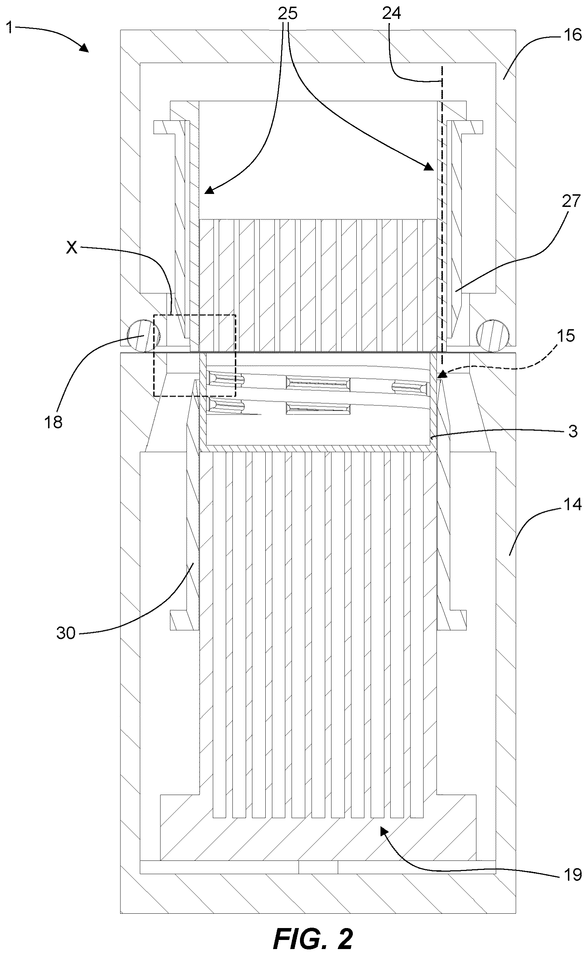

The thermoforming apparatus 1 according to this invention comprises a supporting element 14, which defines a housing space 15 for receiving the support 3, and a closing element 16, which is operatively associated with the supporting element 14. The supporting element 14 and the closing element 16 are movable, at least one relative to the other, between a home position and a working position, advantageously by following a translating motion along a first line of shifting 17 (which is preferably positioned vertically). When the supporting element 14 and the closing element 16 are in the home position, the supporting element 14 and the closing element 16 are spaced apart from each other to allow access to the housing space 15 (Figures 1 and 7 to 9). In contrast, when the supporting element 14 and the closing element 16 are in the working position, the supporting element 14 and the closing element 16 are coupled to each other, the closing element 16 closes the top of the housing space 15 and, in use, they retain the coating film 2 between them above the support 3 which is inserted inside the housing space 15 (Figures 2 to 6). Advantageously, when the supporting element 14 and the closing element 16 are in the working position, the closing element 16 closes the top of the housing space 15 in a fluid-tight way relative to the outside, therefore substantially defining a sealed working chamber (similarly to what happens in any prior art thermoforming apparatus). With regard to that, advantageously one of either the supporting element 14 or the closing element 16 comprises a sealing gasket 18 (in the figures, the closing element 16 comprises the sealing gasket 18), which is interposed between them and which surrounds at least the entire upper opening 12 of the housing space 15, allowing the housing space 15 to be kept sealed fluid-tight relative to the outside, when the supporting element 14 and the closing element 16 are in the working position.

It should be emphasised that below, for simplicity, reference will mainly be made to an embodiment in which the supporting element 14 is fixed and stationary and the closing element 16 is movable relative to the supporting element 14, without limiting this invention to this embodiment.

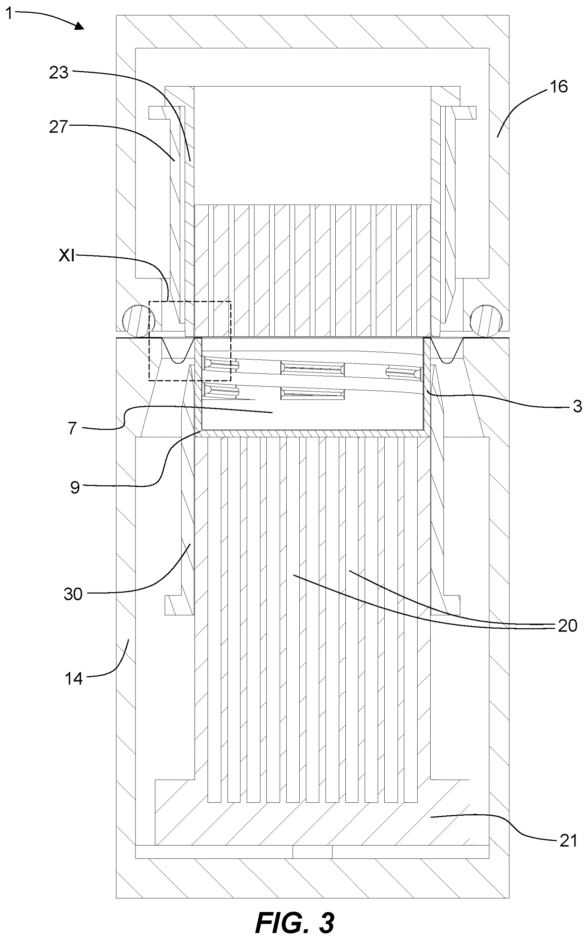

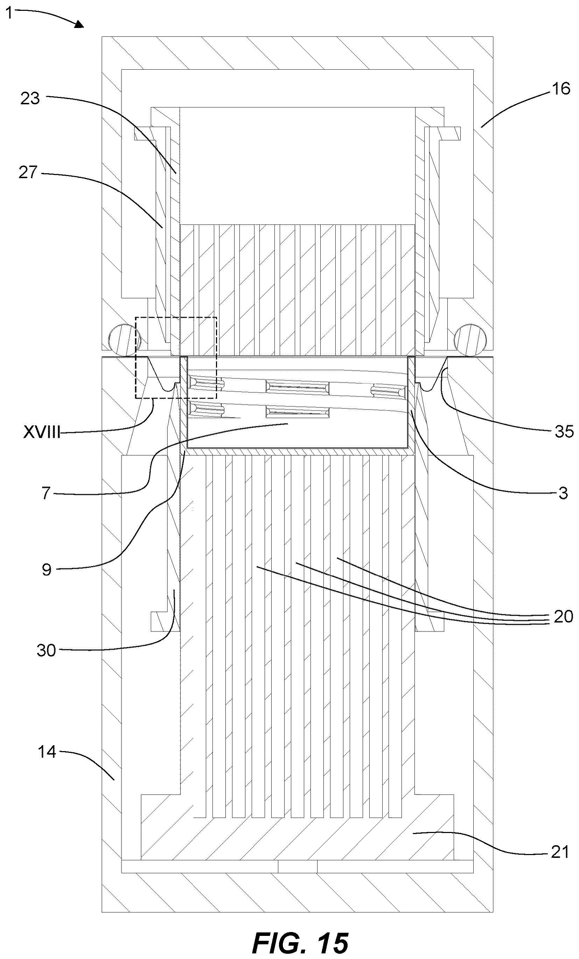

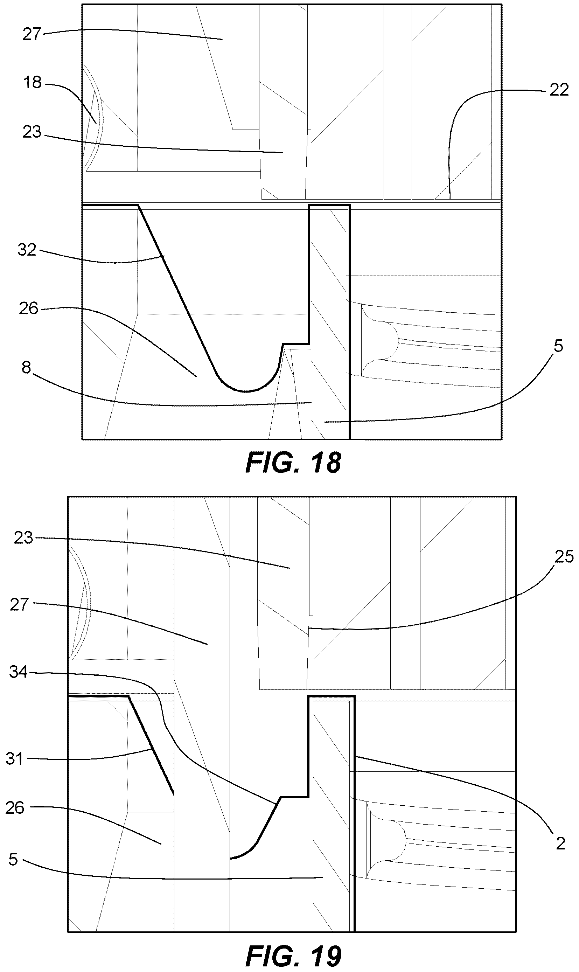

Secondly, the thermoforming apparatus 1 comprises means for creating a vacuum 19 which are associated with the supporting element 14. Those means for creating a vacuum 19 are configured both to generate the vacuum in the housing space 15 when the supporting element 14 and the closing element 16 are in the working position, and to cause the coating film 2 to be formed and adhere to the inner surface 6 of the support 3. In some embodiments, the means for creating a vacuum 19 are configured to cause the coating film 2 to be formed and adhere only to the inner surface 6 of the support 3 and to the free upper edge 11 (as shown in Figure 3). In contrast, in other embodiments, the coating film 2 is formed and made to adhere to the inner surface 6 of the support 3, and to the free upper edge 11, and to part of the outer surface 8 at the lateral wall 5 of the support 3. In contrast, in yet other embodiments, the means for creating a vacuum 19 are configured to cause the coating film 2 to be formed and adhere to the inner surface 6 of the support 3, to the free upper edge 11, to part of the outer surface 8 at the lateral wall 5 of the support 3 and to part of a positioning element 30, described in detail below (as shown in Figures 15 and 18).

It should be emphasised that further embodiments are possible, not shown in the figures, in some of which, for example, the coating film 2 is also made to adhere to part of the supporting element 14 (in particular, to an inner portion 35 which defines part of a receiving space 26 described in detail below).

Advantageously, those means for creating a vacuum 19 comprise suction channels 20, which are preferably made in the supporting element 14, and a suction device, which is in fluid communication with the housing space 15 through the suction channels 20 and which is not illustrated in the figures. In the embodiment illustrated, the suction channels 20 are made in an inserting element 21, which is part of the supporting element 14 and which will be described in more detail below.

The ways in which the vacuum is created inside the housing space 15, when the supporting element 14 and the closing element 16 are in the working position, are known to a person expert in the sector and, for this reason, will not be described in further detail below.

In some embodiments, the thermoforming apparatus 1 also comprises means for creating an overpressure (not shown in the accompanying figures) which are suitable for injecting pressurised air into the housing space 15 and which are advantageously associated with the closing element 16. The means for creating the overpressure are configured to create an overpressure in the housing space 15, when the supporting element 14 and the closing element 16 are in the working position, in such a way as to facilitate coating film 2 forming and adhesion to the inner surface 6 of the support 3, together with the means for creating a vacuum 19. It should be emphasised that even the ways in which the overpressure is created inside the housing space 15, when the supporting element 14 and the closing element 16 are in the working position, are known to a person expert in the sector and, for this reason, will not be described in further detail below.

The thermoforming apparatus 1 also comprises heating means for heating the coating film 2 configured to bring the material of the coating film 2 to the thermoforming temperature. In some embodiments, the heating means are preferably associated with the closing element 16. Advantageously, in these embodiments the heating means for heating the coating film 2 comprise a heating surface 22, which is preferably associated with the closing element 16 and which is directed towards the housing space 15, and a heating device, which is operatively associated with the heating surface 22 for heating the heating surface 22 (for example, the heating device may comprise electric heating elements).

In other embodiments the heating means may however take on different forms.

In other embodiments, for example, the heating means are associated with a feeding device for feeding the coating film 2 above the housing space 15. However, such aspects are known to a person expert in the sector and therefore do not need to be explained any further.

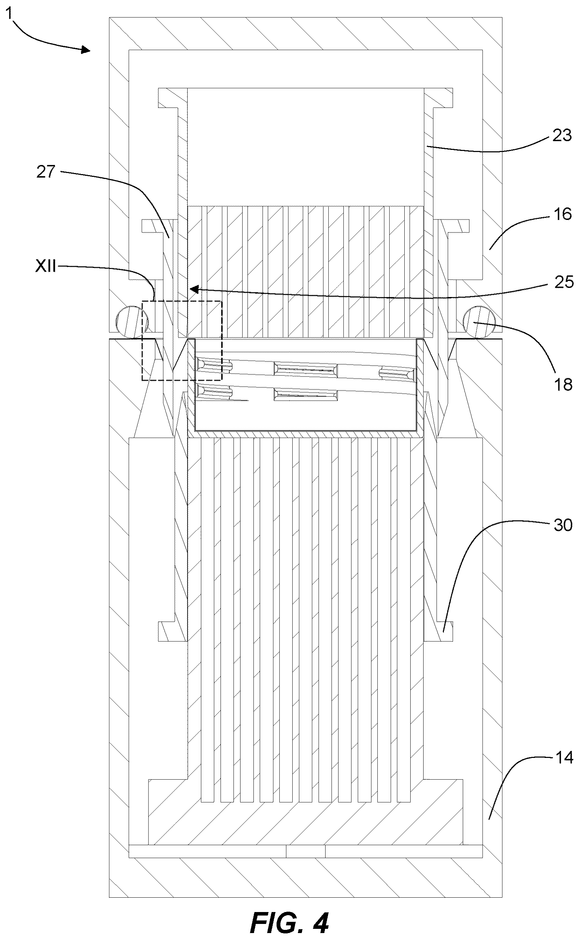

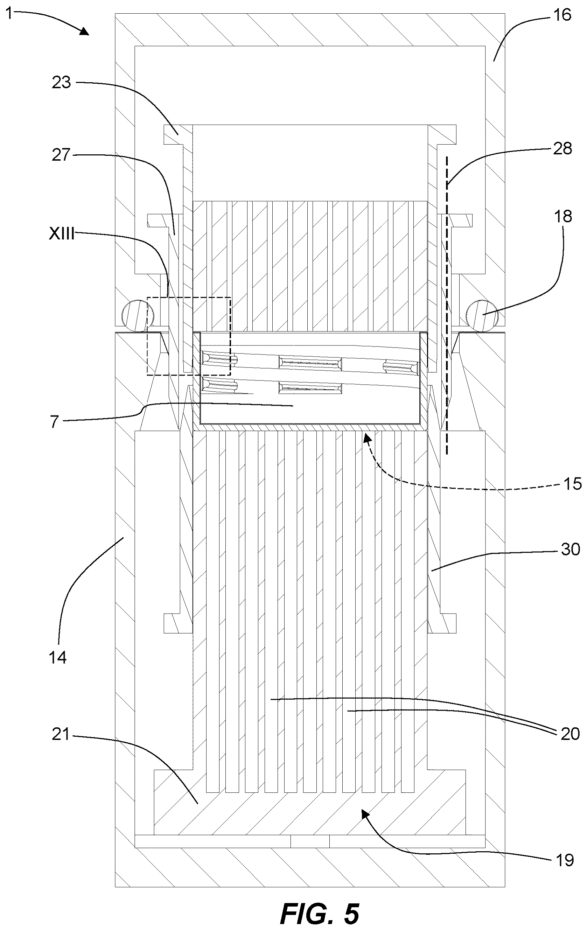

In accordance with the main innovative aspect of this invention, the thermoforming apparatus 1 also comprises an application element 23 which is movable, relative to the supporting element 14, between a non-operating position and an operating position, with the movement of the application element 23 from the non-operating position to the operating position causing in use application of the coating film 2 to the outer surface 8 at the lateral wall 5. When the application element 23 is in the non-operating position, the application element 23 is spaced apart from the housing space 15 (Figures 3 and 4). In contrast, when the application element 23 is in the operating position, the application element 23 delimits externally the housing space 15 for coupling in use to the outer surface 8 of the support 3 placed in the housing space 15 (at the lateral wall 5 - Figure 5).

Advantageously, the thermoforming apparatus 1 is configured to cause first forming (thermoforming if heating of the coating film 2 occurs when the coating film 2 is placed between the supporting element 14 and the closing element 16) and adhesion of the coating film 2 to the inner surface 6 of the support 3, and then to move the application element 23 from the non-operating position to the operating position in such a way as to apply the coating film 2 to the outer surface 8 of the support 3 at the lateral wall 5. That aspect will be described more specifically below, when describing an operating cycle of the embodiment of the thermoforming apparatus 1 which is shown in the figures.

Moreover, preferably the application element 23 is movable between the non-operating position and the operating position by means of a translating movement along a line of movement 24 which is straight. In particular, the line of movement 24 is vertical and is advantageously parallel to the first line of shifting 17.

In the preferred embodiments, the application element 23 has an application surface 25 inside it which extends in an annular way. During the movement of the application element 23 from the non-operating position to the operating position, the application surface 25 slides outside the housing space 15 to slide along the outer surface 8 of the support 3 which is placed in the housing space 15. In particular, the application surface 25 slides along the outer surface 8 of the support 3 starting from the free upper edge 11 of the lateral wall 5 and towards the perimetric edge 9 of the bottom wall 4, to push the coating film 2 towards the outer surface 8 of the support 3 at the lateral wall 5 starting from the free upper edge 11. That is advantageously applied in the embodiments, such as that illustrated, in which the application element 23 is movable between the non-operating position and the operating position by means of a translation along the straight line of movement 24, in particular from the top downwards. In this case, in fact, the application element 23 pushes the coating film 2 downwards and towards the outer surface 8 of the support 3 to make it adhere to the outer surface 8 of the support 3 at the lateral wall 5.

Moreover, advantageously, the inside of the application element 23 is at least partly substantially shaped to match the outer surface 8 of the support 3 at the lateral wall 5. That allows the coating film 2 to be applied to the outer surface 8 in a substantially uniform way, avoiding the presence of zones in which the coating film 2 does not adhere to the outer surface 8. In these embodiments, when the outer shape of the lateral wall 5 of the support 3 changes the application element 23 must be substituted with one which is suitable.

In the preferred embodiments, the application element 23 is moved from the non-operating position to the operating position while the supporting element 14 and the closing element 16 are in the working position. However, even if not shown in the figures, embodiments are possible in which the application element 23 is moved from the non-operating position to the operating while the supporting element 14 and the closing element 16 are in the home position or they are shifting from the working position to the home position.

Advantageously, moreover, the supporting element 14 defines the receiving space 26 which surrounds the housing space 15. When the application element 23 is in the operating position, the application element 23 is positioned inside the receiving space 26. Preferably, in fact, the movement of the application element 23 from the non-operating position to the operating position causes insertion of the application element 23 into the receiving space 26 and the movement of the application element 23 from the operating position to the non-operating position causes removal of the application element 23 from the receiving space 26. The receiving space 26 has an annular shape which extends around the entire housing space 15 defining substantially an annular channel around the housing space 15.

In some embodiments, the application element 23 is heated. In this case, the thermoforming apparatus 1 advantageously comprises heating means for heating the application element 23 which are operatively associated with the application element 23 and which are configured to heat the application element 23 to a preset temperature and to keep it there.

In other embodiments, in contrast, there are no heating means present for heating the application element 23. In this case, preferably, the movement of the application element 23 from the non-operating position to the operating position occurs when the coating film 2 is still hot as a result of the thermoforming process.

Advantageously, the thermoforming apparatus 1 also comprises cutting means 27 which are associated with one of either the supporting element 14 or the closing element 16 and which are positioned outside the housing space 15. The cutting means 27 are configured to cut the coating film 2 from a web or from a sheet 32 larger than the coating film 2 which is retained between the supporting element 14 and the closing element 16 when the supporting element 14 and the closing element 16 are in the working position. The cutting means 27 are movable between a retracted position and an extracted position and the movement from the retracted position to the extracted position causes the cutting of the coating film 2.

In some embodiments, such as that illustrated in the figures, the cutting means 27 comprise an annular blade.

Advantageously, when the cutting means 27 are in the retracted position, the cutting means 27 are removed from the receiving space 26 and, when the cutting means 27 are in the extracted position, the cutting means 27 are inserted in the receiving space 26. The movement of the cutting means 27 from the retracted position to the extracted position causes insertion of the cutting means 27 into the receiving space 26 and the movement of the cutting means 27 from the extracted position to the retracted position causes, in contrast, removal of the cutting means 27 from the receiving space 26.

As in the case of the embodiment illustrated, in the preferred embodiments the cutting means 27 are fixed to the closing element 16 during the movement of the closing element 16 from the home position to the working position, and vice versa, whilst the cutting means 27 are movable, between the retracted position and the extracted position, relative to the supporting element 14 and relative to the closing element 16 when the supporting element 14 and the closing element 16 are in the working position. In particular, in the embodiment illustrated, the cutting means 27 are associated with the closing element 16 and, when the cutting means 27 are in the retracted position, they do not project from the closing element 16 (for example, Figure 3), whilst when the cutting means 27 are in the extracted position, they project from the closing element 16 (for example, Figure 4).

In the preferred embodiments, the cutting means 27 are movable along a second line of shifting 28 which is advantageously straight and which is preferably vertical. Moreover, when they are in the extracted position the cutting means 27 are positioned further outside the housing space 15 than the application element 23 placed in the operating position (when the supporting element 14 and the closing element 16 are in the working position).

Advantageously, the application element 23 is moved from the non-operating position to the operating position after the movement of the cutting means 27 from the retracted position to the extracted position. That is clearly visible from the sequence illustrated in Figure 3 (in which the cutting means 27 are in the retracted position and the application element 23 is in the non-operating position), Figure 4 (in which the cutting means 27 are in the extracted position and the application element 23 is in the non-operating position) and Figure 5 (in which the cutting means 27 are in the extracted position and the application element 23 is in the operating position). In particular, the application element 23 is moved from the non-operating position to the operating position while the cutting means 27 are kept in the extracted position.

In the preferred embodiments, such as that illustrated in the figures, the supporting element 14 also comprises the inserting element 21 which is associated with the housing space 15 and which, when the supporting element 14 and the closing element 16 are in the home position, is movable between a lowered position and a raised position. When the inserting element 21 is in the lowered position, the inserting element 21 is disengaged from the housing space 15 which can therefore house the support 3 (Figure 2). In contrast, when the inserting element 21 is in the raised position, the inserting element 21 defines a resting plane 29 for receiving the support 3 above the housing space 15 (Figure 1). In the embodiment illustrated, the inserting element 21 slides between the lowered position and the raised position along a line parallel to the line of movement 24 and to the first line of shifting 17 and, when it is in the raised position, the inserting element 21 occupies the housing space 15.

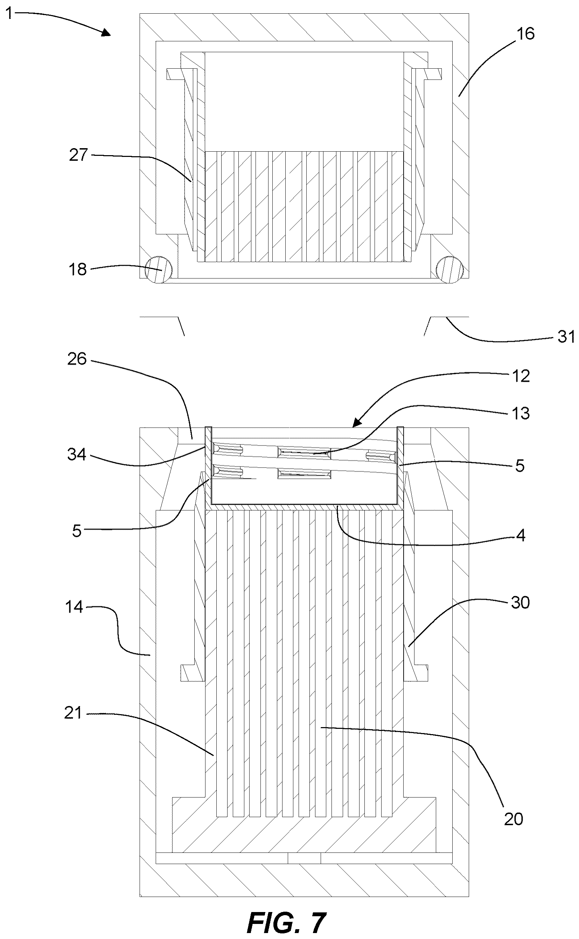

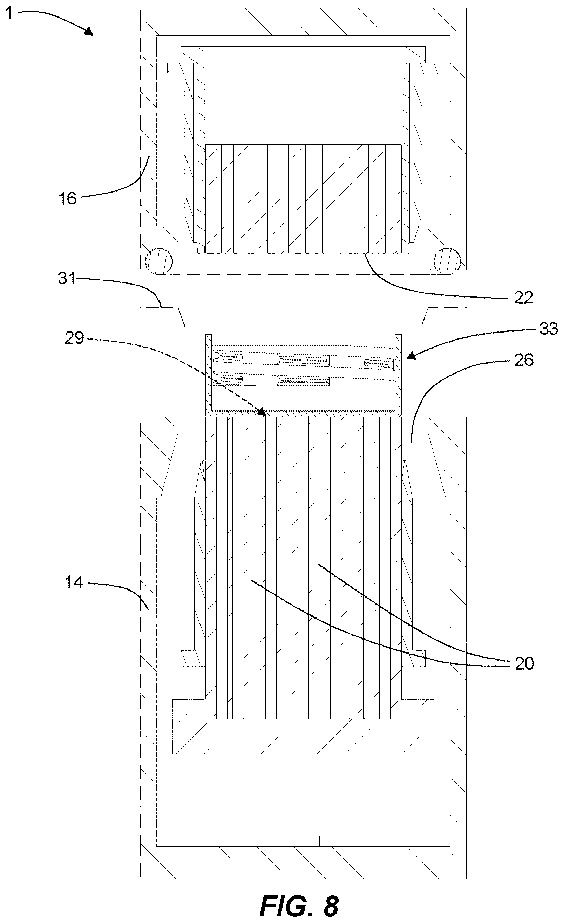

Advantageously, in use, after positioning of the support 3, to which the coating film 2 must be applied, on the inserting element 21 placed in the raised position, the movement of the inserting element 21 from the raised position to the lowered position causes insertion of the support 3 into the housing space 15 (passage from the situation shown in Figure 1 to the situation shown in Figure 2), whilst, after application of the coating film 2, the movement of the inserting element 21 from the lowered position to the raised position causes extraction of the support 3 from the housing space 15 (passage from the situation shown in Figure 7 to the situation shown in Figure 8).

Advantageously, as already indicated, made in the inserting element 21 are the suction channels 20 which put in fluid communication the housing space 15 and the suction device.

Moreover, preferably, the supporting element 14 also comprises a positioning element 30 which is operatively associated with the inserting element 21 and which is configured at least to adopt a guiding position, in which it defines a guide for insertion of the support 3 into the housing space 15 during the movement of the inserting element 21 from the raised position to the lowered position. During the movement of the inserting element 21 from the raised position to the lowered position, the positioning element 30 is kept in the guiding position and gradually increasingly projects relative to the resting plane 29 defined by the inserting element 21. In other words, the positioning element 30 in the guiding position acts as a centring element for the support 3 allowing the support 3 to be correctly positioned during its insertion into the housing space 15. Preferably, as can be seen in Figure 3, the positioning element 30 is also in the guiding position during thermoforming and adhesion of the coating film 2 to the inner surface 6 of the support 3. In this way, in some cases (as can be seen for example in Figure 15) during thermoforming and adhesion of the coating film 2 it is possible that part of the coating film 2 is also applied on the positioning element 30 (as well as on the free upper edge 11 and on the outer surface 8 at the lateral wall 5).

In the embodiment illustrated, the positioning element 30 laterally surrounds the support 3 inserted into the housing space 15 and, similarly to the application element 23, is in the shape of a collar.

Advantageously, moreover, the positioning element 30 is movable between the guiding position and a disengaging position, and is kept in the disengaging position during application of the coating film 2 on the outer surface 8 of the support 3 at the lateral wall 5, that is to say, during the movement of the application element 23 from the non-operating position to the operating position. In particular, when the inserting element 21 is in the lowered position, the positioning element 30 in the disengaging position projects upwards relative to the resting plane 29 of the inserting element 21, but less than when it projects in the guiding position. Moreover, the positioning element 30 in the disengaging position allows the support 3 to be kept in the correct position during application of the coating film 2 on the outer surface 8 of the support 3 at the outer surface 8.

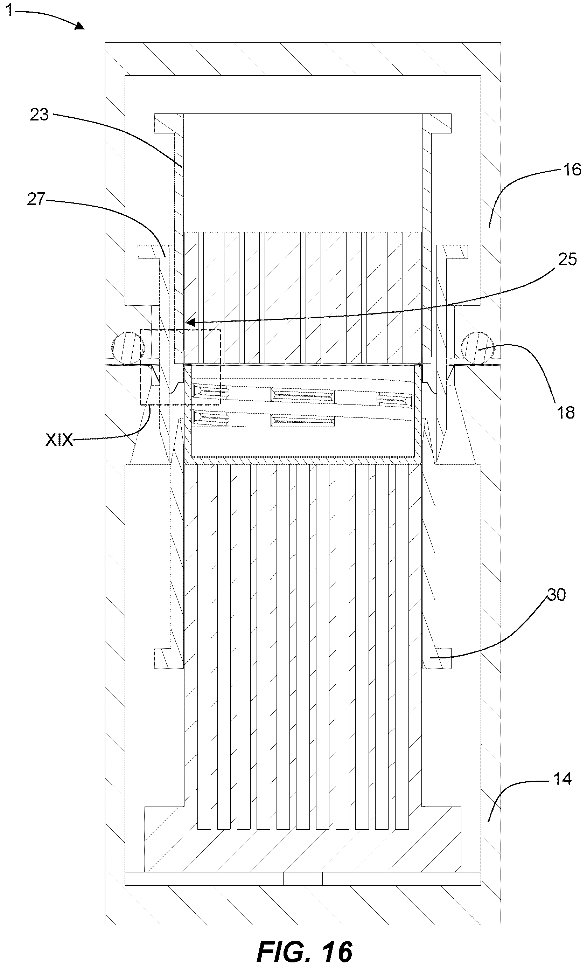

Advantageously, if part of the coating film 2 also adheres to the positioning element 30, the movement of that positioning element 30 from the guiding position to the disengaging position causes the coating film 2 to detach from the positioning element 30 (as can be seen in the passage from the situation shown in Figure 15 to the situation shown in Figure 16).

Below is a description of an example of an operating cycle of the thermoforming apparatus 1 according to the embodiment which is shown in Figures 1 to 9.

First of all, the supporting element 14 and the closing element 16 are in the home position and are spaced apart from each other, the application element 23 and the cutting means 27 are respectively in the non-operating position and in the retracted position, whilst the inserting element 21 and the positioning element 30 are respectively in the raised position and in the guiding position. Moreover, the support 3 has been positioned on the resting plane 29 defined by the inserting element 21 in the raised position and the coating film 2 is positioned between the supporting element 14 and the closing element 16 above the support 3 (Figure 1).

Then, the inserting element 21 is moved from the raised position to the lowered position, and the supporting element 14 and the closing element 16 are moved from the home position to the working position. That movement may occur simultaneously or it is possible that the inserting element 21 is moved from the raised position to the lowered position first, and then the supporting element 14 and the closing element 16 are moved from the home position to the working position. In this way, the support 3 is received inside the housing space 15 and is guided by the positioning element 30 in the guiding position and a sheet 32, or a web, larger than the coating film 2 from which to then cut the coating film 2, is retained between the supporting element 14 and the closing element 16 (Figure 2).

Afterwards, keeping the elements in the positions previously described, comes activation of the means for creating a vacuum 19 for thermoforming and for making the (suitably heated) coating film 2 adhere to the inner surface 6 of the support 3 (Figure 3). If the means for creating an overpressure are also present (not illustrated in the figures), those means for creating the overpressure are activated for injecting pressurised air into the housing space 15 to facilitate thermoforming and adhesion of the coating film 2 to the inner surface 6 of the support 3.

Then, the positioning element 30 and the cutting means 27 are moved (simultaneously or one after the other) respectively from the guiding position to the disengaging position and from the retracted position to the extracted position. In this way the coating film 2 is cut from the web or from the sheet 32 thereby separating the coating film 2 from a piece of scrap 31 of the web or of the sheet 32 larger than the coating film 2 (Figure 4).

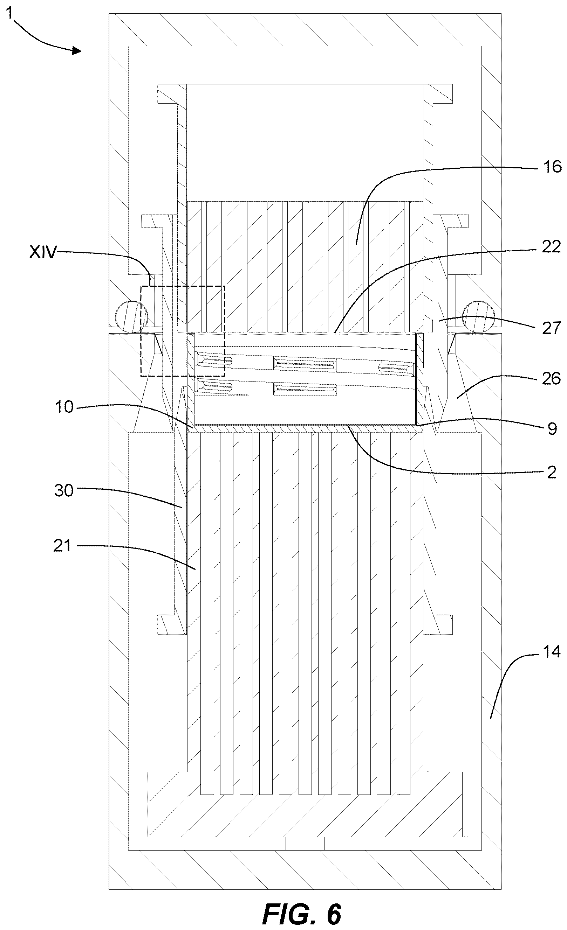

While the positioning element 30 is kept in the disengaging position and the cutting means 27 are kept in the extracted position, the application element 23 is then moved from the non-operating position to the operating position to apply the coating film 2 to the outer surface 8 at the lateral wall 5 (Figure 5). Then, simultaneously or not, the application element 23 is moved from the operating position to the non-operating position (Figure 6), and the cutting means 27 are moved from the extracted position to the retracted position.

The supporting element 14 and the closing element 16 are then moved from the working position to the home position opening the top of the housing space 15 (Figure 7). It should be emphasised that Figure 7 shows the piece of scrap 31 of the web or of the sheet 32 larger than the coating film 2 between the supporting element 14 and the closing element 16 not retained by any element.

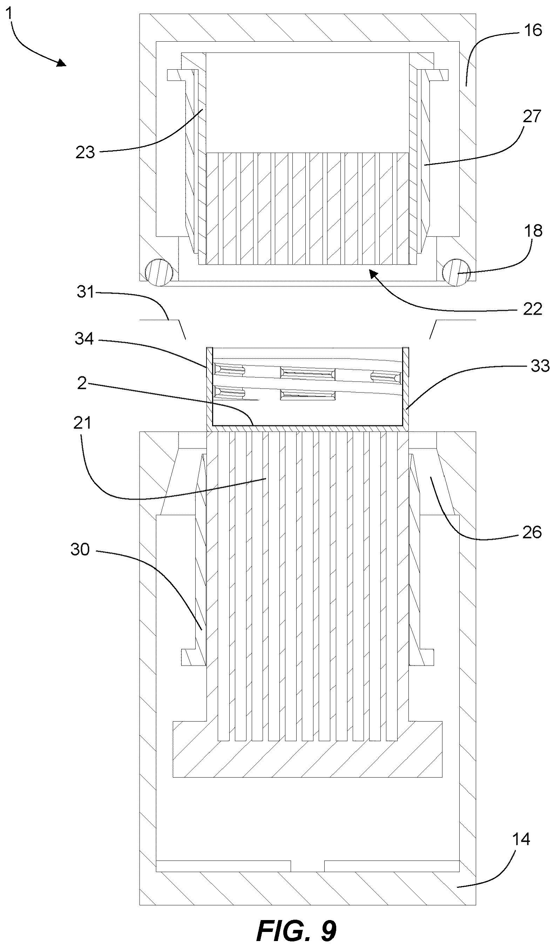

To allow removal of the support 3 (to which the coating film 2 has been applied) from the housing space 15, the inserting element 21 is moved from the lowered position to the raised position thereby making the support 3 come out of the housing space 15 (Figure 8); in turn the positioning element 30 is moved from the disengaging position to the guiding position in such a way as to be in the correct position to start a new operating cycle of the thermoforming apparatus 1 (Figure 9) based on what has been described so far.

Moving on now to a description of the method for making a cap 33 which is the subject matter of the second innovative aspect of this invention, wherein the cap 33 comprises a support 3 and a coating film 2 applied to the support 3.

First of all, it must be emphasised that said method may advantageously be implemented using a thermoforming apparatus 1 in accordance with this invention of the type described above, such as for example the thermoforming apparatus 1 illustrated in the figures.

Secondly, it must be emphasised that what was described above with reference to the thermoforming apparatus 1 may also advantageously be applied with reference to the method described here if technically applicable. In particular, the support 3 for making the cap 33 is at least partly made of cellulose material and comprises the bottom wall 4 and the lateral wall 5 which extends perpendicularly to the bottom wall 4 starting from the perimetric edge 9 of the bottom wall 4 as far as a free upper edge 11 without a flange, with the bottom wall 4 and the lateral wall 5 which define the inner surface 6 of the support 3, which delimits the inner cavity 7, and the outer surface 8 of the support 3.

First of all, the method comprises a preliminary step in which the support 3 is picked up which has a shape which corresponds to that of the cap 33 to be obtained without the thickness of the coating film 2 which must be applied to the self-same support 3.

The method further comprises an inner coating step, performed after the preliminary step, and, then, an applying step.

During the inner coating step, the inside of the support 3 is coated by applying the coating film 2 to the inner surface 6 of the support 3, but also leaving a portion 34 of coating film 2 which extends outside relative to the inner cavity 7 of the support 3 starting from the free upper edge 11 of the lateral wall 5 of the support 3. Advantageously, in some embodiment of this method, during the inner coating step the coating film 2 is also applied to part of the outer surface 8 of the support 3, at the lateral wall 5 of the support 3.

In the preferred embodiments, the inner coating step is performed by thermoforming the coating film 2 on the inner surface 6. Advantageously, using the thermoforming apparatus 1 previously described, the inner coating step is performed by keeping the supporting element 14 and the closing element 16 in the operating position and creating the vacuum inside the housing space 15 using the means for creating a vacuum 19 (passage from the situation shown in Figure 2 to the situation shown in Figure 3).

In contrast, during the applying step, the portion 34 of the coating film 2, which extends outside relative to the inner cavity 7, is applied to the outer surface 8 of the support 3 at the lateral wall 5. It should also be emphasised that, at least after performing the applying step, the coating film 2 is also applied on the free upper edge 11 of the support 3 and therefore extends without interruption on the entire inner surface 6, on the free upper edge 11 and on part of the outer surface 8 at the lateral wall 5.

In particular, in the preferred embodiments of the method, during the applying step the portion 34 of the coating film 2 is pushed towards the outer surface 8 at the lateral wall 5. In more detail, during the applying step the portion 34 of the coating film 2 is pushed towards the outer surface 8 of the support 3 starting from the free upper edge 11 and then proceeding towards the perimetric edge 9 of the bottom wall 4 (and, therefore, towards the lower edge 10 of the lateral wall 5). Advantageously, using the thermoforming apparatus 1 previously described, the inner coating step is performed by moving the application element 23 from the non-operating position to the operating position in such a way that the application element 23 pushes the coating film 2 towards the outer surface 8 of the support 3 at the lateral wall 5 (passage from the situation shown in Figure 4 to the situation shown in Figure 5).

Preferably, moreover, the method comprises a cutting step, which is performed between the inner coating step and the applying step. During the cutting step, the coating film 2 is cut from a web or from a sheet 32 larger than the coating film 2. Before the cutting step, the portion 34 of the coating film 2 which extends outside the inner cavity 7, starting from the free upper edge 11 of the lateral wall 5 of the support 3, is connected to the rest of the larger web or sheet 32. During the cutting step the portion 34 of the coating film 2 is separated from the rest of the larger web or sheet 32, which constitutes a piece of scrap 31 of the web or of the sheet 32 (passage from the situation shown in Figure 3 to the situation shown in Figure 4).

This invention brings important advantages.

In fact, thanks to this invention, it was possible to make a thermoforming apparatus for applying a coating film to a support, and to define a method for making a cap, which allow objects (and in particular caps) to be made which are structurally stable even using supports constituted of cellulose-based materials or those with similar capacity for absorbing liquids, in a way that is simpler than in the prior art.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A thermoforming apparatus for applying a coating film (2) to a support (3), wherein the support (3) comprises a bottom wall (4) and a lateral wall (5) which extends starting from a perimetric edge (9) of the bottom wall (4), the bottom wall (4) and the lateral wall (5) defining an inner surface (6) of the support (3), which delimits an inner cavity (7), and an outer surface (8) of the support (3),
the thermoforming apparatus (1) comprising:
a supporting element (14), which defines a housing space (15) for receiving, in use, said support (3); and
a closing element (16), which is operatively associated with the supporting element (14);
wherein at least one of either the supporting element (14) or the closing element (16) is movable, relative to the other, between a home position, in which the supporting element (14) and the closing element (16) are spaced apart from each other to allow access to the housing space (15), and a working position, in which the supporting element (14) and the closing element (16) are coupled to each other, the closing element (16) closes the top of the housing space (15) and, in use, the supporting element (14) and the closing element (16) retain the coating film (2) between them above the support (3) inserted into the housing space (15);
said thermoforming apparatus (1) also comprising:
means for creating a vacuum (19), which are associated with the supporting element (14) and which are configured to generate the vacuum in the housing space (15) when the supporting element (14) and the closing element (16) are in the working position and to cause, in use, the coating film (2) to be formed and adhere to the inner surface (6) of the support (3); and
an application element (23), which is movable relative to the supporting element (14) and to the housing space (15) between a non-operating position, in which the application element (23) is spaced apart from the housing space (15) and an operating position, in which the application element (23) delimits externally the housing space (15) for coupling, in use, to the outer surface (8) of the support (3) placed in the housing space (15), at the lateral wall (5);
wherein, in use, the movement of the application element (23) from the non-operating position to the operating position causes application of the coating film (2) to the outer surface (8) at the at least one lateral wall (5).

2. The thermoforming apparatus according to claim 1, configured to cause, in use, first the forming and adhesion of the coating film (2) to the inner surface (6) of the support (3), and, then, to move the application element (23) from the non-operating position to the operating position.

3. The thermoforming apparatus according to claim 1 or 2, wherein the application element (23) is movable between the non-operating position and the operating position by means of a translating movement along a line of movement (24) which is straight.

4. The thermoforming apparatus according to any one of claims 1 to 3, wherein the application element (23) has an application surface (25) inside which extends in an annular way and wherein, in use, during the movement of the application element (23) from the non-operating position to the operating position, the application surface (25) slides outside the housing space (15) to slide, in use, along the outer surface (8) of the support (3), placed in the housing space (15), starting from a free upper edge (11) of the lateral wall (5) and towards the perimetric edge (9) of the bottom wall (4), to push the coating film (2) towards the outer surface (8) of the support (3) at the lateral wall (5).

5. The thermoforming apparatus according to any one of claims 1 to 4, wherein the application element (23) is, inside, at least partly substantially shaped to match the outer surface (8) of the support (3) at the lateral wall (5).

6. The thermoforming apparatus according to any one of claims 1 to 5, wherein the application element (23) is moved from the non-operating position to the operating position while the supporting element (14) and the closing element (16) are in the working position.

7. The thermoforming apparatus according to any one of claims 1 to 6, wherein the supporting element (14) defines a receiving space (26) which surrounds the housing space (15), and wherein, when the application element (23) is in the operating position, the application element (23) is positioned inside said receiving space (26).

8. The thermoforming apparatus according to any one of claims 1 to 7, wherein said application element (23) is heated.

9. The thermoforming apparatus according to any one of claims 1 to 8, also comprising cutting means (27) which are associated with one of either the supporting element (14) or the closing element (16), which are positioned outside the housing space (15) and which are configured to cut in use the coating film (2) from a web or from a sheet (32) larger than the coating film (2), which is retained between the supporting element (14) and the closing element (16) when the supporting element (14) and the closing element (16) are in the working position, said cutting means (27) being movable between a retracted position and an extracted position and the movement from the retracted position to the extracted position causing, in use, the cutting of the coating film (2).

10. The thermoforming apparatus according to claim 9, wherein, in use, the application element (23) is moved from the non-operating position to the operating position after the movement of the cutting means (27) from the retracted position to the extracted position.

11. The thermoforming apparatus according to any one of claims 1 to 10, wherein the supporting element (14) also comprises an inserting element (21) associated with the housing space (15) which, when the supporting element (14) and the closing element (16) are in the home position, is movable between a lowered position, in which it is disengaged from the housing space (15), and a raised position, in which it comes out of the housing space (15) and defines a resting plane (29) for receiving, in use, the support (3).

12. The thermoforming apparatus according to claim 11, wherein the supporting element (14) also comprises a positioning element (30) which is operatively associated with the inserting element (21) and which is configured to adopt a guiding position in which it defines a guide for insertion of the support (3) into the housing space (15) during the movement of the inserting element (21) from the raised position to the lowered position.

13. The thermoforming apparatus according to claim 12, wherein the positioning element (30) is movable between the guiding position and a disengaging position, and wherein the positioning element (30) remains in the disengaging position during the forming of the coating film (2) on the outer surface (8) of the support (3) at the lateral wall (5).

14. A method for making a cap (33) comprising a support (3) and a coating film (2) applied to the support (3), wherein the support (3) is at least partly made of cellulose material and comprises a bottom wall (4) and a lateral wall (5) which extends perpendicularly to the bottom wall (4) starting from a perimetric edge (9) of the bottom wall (4) as far as a free upper edge (11) without a flange, the bottom wall (4) and the lateral wall (5) defining an inner surface (6) of the support (3), which delimits an inner cavity (7), and an outer surface (8) of the support (3),
said method comprising the following operating steps:
a preliminary step, in which the support (3) is picked up which has a shape which corresponds to that of the cap (33) to be obtained without the thickness of the coating film (2) which must be applied to said support (3);
an inner coating step, performed after the preliminary step, during which the inside of the support (3) is coated by applying the coating film (2) to the inner surface (6) of the support (3), leaving a portion (34) of coating film (2) extending outside the inner cavity (7) starting from the free upper edge (11) of the lateral wall (5) of the support (3); and
an applying step, which is performed after the inner coating step, during which said portion (34) of the coating film (2), which extends outside the inner cavity (7), is applied to the outer surface (8) of the support (3) at the lateral wall (5).

15. The method according to claim 14, wherein during the applying step said portion (34) of the coating film (2) is pushed towards the outer surface (8) at the lateral wall (5).

16. The method according to claim 15, wherein during the applying step said portion (34) of the coating film (2) is pushed towards the outer surface (8) by proceeding starting from the free upper edge (11) towards the perimetric edge (9) of the bottom wall (4).

17. The method according to claim 14, 15 or 16, also comprising a cutting step, which is performed between the inner coating step and the applying step, in which the coating film (2) is cut from a web or from a sheet (32) larger than the coating film (2), at the end of the cutting step said portion (34) of the coating film (2) extending outside the inner cavity (7) starting from the free upper edge (11) of the lateral wall (5) of the support (3).

18. The method according to any one of claims 14 to 17, wherein, during the inner coating step, the coating film (2) is also applied to part of the outer surface (8) of the support (3) at the lateral wall (5) of the support (3).
